# EUROPÄISCHE PATENTSCHRIFT

(11) **EP 1 445 747 B1**
(45) Veröffentlichungstag und Bekanntmachung des Hinweises auf die Patenterteilung: **28.10.2009**
(21) Anmeldenummer: 03025839.6
(22) Anmeldetag: 11.11.2003
(51) Int. Cl.: G08C 23/04, H04B 10/10

(54) **Verfahren zum Übertragen von Steuerbefehlen von einem Sendeelement zu einem Messtaster**
Method for transmission of control commands from a transmitter to a measuring probe.
Procédé de transmission de signaux de commande d'un émetteur vers un palpeur de mesure

(30) Priorität: 29.01.2003 DE 10303551
(43) Veröffentlichungstag der Anmeldung: 11.08.2004
(73) Patentinhaber: Dr. Johannes Heidenhain GmbH, 83292 Traunreut (DE)
(72) Erfinder: Gröll, Klaus, 83329 Waging am See (DE); Eisenberger, Christian, 83324 Ruhpolding (DE)

(56) Entgegenhaltungen:
- EP-A- 1 130 557
- US-A- 4 426 662
- US-A- 4 623 887
- US-A- 4 788 542
- US-A- 4 959 810
- US-A- 5 850 189

## Beschreibung

Die Erfindung betrifft ein Verfahren zum Übertragen von Steuerbefehlen von einem Sendeelement zu einem Messtaster in einem Tastsystem gemäß dem Anspruch 1.

Derartige Tastsysteme werden beispielsweise zur Positionsbestimmung von Werkstücken verwendet, die in materialbearbeitenden Maschinen, z. B. Fräsmaschinen, eingespannt sind. Diese Tastsysteme weisen häufig ein stationäres Teil auf, welches an einem ortfesten Element der materialbearbeitenden Maschinen befestigt ist und ein relativ dazu bewegliches Teil, welches häufig als Messtaster bezeichnet wird, das an einem beweglichen Element der materialbearbeitenden Maschinen, etwa an einer Frässpindel angebracht ist. Dabei umfasst der Messtaster ein aus einer Ruheposition auslenkbares Tastelement, welches bei einer Auslenkung aus seiner Ruheposition heraus ein Schaltsignal erzeugt. Unter der Ruheposition des Tastelementes wird eine Position des Tastelementes verstanden, in der es keinen Kontakt mit einem Werkstück hat. Bei Kontakt des Tastelementes mit dem Werkstück wird das Tastelement aus seiner Ruheposition heraus ausgelenkt.

Bei sogenannten kabellosen Tastsystemen wird das entsprechende Schaltsignal vom Messtaster als elektromagnetisches Signal, insbesondere als Infrarotsignal, an das stationäre Teil übertragen. In diesem werden die Ausgangssignale des Tastsystems ausgewertet, um das Auftreten von Schaltsignalen (also eine Auslenkung des Tastelementes) festzustellen.

Üblicherweise befindet sich der Messtaster außerhalb der Messbetriebszeiten in einem Stand-By-Zustand. Um den Messtaster von seinem Stand-By-Zustand in einen Messbetriebszustand zu versetzen, bedarf es eines Einschalt- bzw. Aktivierungsvorganges.

In der EP 1 130557 A2 wird ein Verfahren zum drahtlosen Aktivieren eines Messtasters beschrieben. Dabei werden kontinuierlich Infrarot-Licht-Impulse mit einer vorgegebenen Frequenz von einem stationären Sendeelement eines Tastsystems auf einen Messtaster gesendet. Weil dieses Verfahren nicht unanfällig gegenüber Fehlern ist, muss das Signal über eine bestimmte Zeitdauer vom Messtaster empfangen werden, damit eine ausreichende Übertragungssicherheit erreicht werden kann. Sofern aber die Störung im entsprechenden Frequenzbereich ebenfalls über diesen Zeitraum anliegt, wird vom Messtaster auch das Störsignal als Aktivierungssignal interpretiert.

Der Erfindung liegt daher die Aufgabe zugrunde, ein Verfahren zum drahtlosen Übertragen eines Steuerbefehls von einem Sendeelement eines Tastsystems zu einem Messtaster eines Tastsystems zu schaffen, welches störsicher und einfach durchführbar ist.

Diese Aufgabe wird erfindungsgemäß durch die Merkmale des Anspruches 1 gelöst.

Gemäß dem erfindungsgemäßen Verfahren besteht ein Steuerbefehl, der mittels elektromagnetischer Signale in Form von Infrarotlichtimpulsen an einen Messtaster gesendet wird, aus mindestens einer Bitfolge, wobei High-Bits durch die einhüllende Kurve mehrerer mit einer Trägerfrequenz wiederkehrenden elektromagnetischen Signale erzeugt werden. Zur Erhöhung der Übertragungssicherheit wird weiterhin innerhalb einer Bitfolge mindestens einmal ein Low-Bit, oder mehrere aufeinanderfolgende Low-Bits, zwischen zwei High-Bits gesendet, wobei im Messtaster (2) die Infrarotlichtimpulse (S) mit Hilfe einer Fotodiode (2.5) in gepulste elektrische Ströme umgewandelt werden, danach In einem Verstärker (2.6) verstärkt und in elektrische Spannungssignale umgewandelt werden und die Spannungssignale einer CPU (2.8) zugeführt werden, wo sie in einem Analog-Digital-Wandler (2.81) zur weiteren Verarbeitung digitalisiert werden. Durch das Übertragen einer Bitfolge bzw. eines Codewortes wird eine signifikante Erhöhung der Übertragungssicherheit erreicht, zumal die Bits aus mit einer Trägerfrequenz modulierten Signalen bestehen.

Durch dieses Verfahren ist nunmehr eine einfache und sichere Datenübertragung möglich, wobei eine Vielzahl von Befehlen mit unterschiedlicher Bedeutung übertragen werden können.

In einer bevorzugten Ausgestaltung der Erfindung wird eine vergleichsweise niedrige Trägerfrequenz von weniger als 50 kHz, insbesondere weniger als 10kHz verwendet. In einer bevorzugten Ausführungsvariante wird eine Trägerfrequenz von weniger als 5 kHz benutzt.

Mit Vorteil werden die High-Bits durch die einhüllende Kurve von mindestens acht mit einer Trägerfrequenz wiederkehrenden elektromagnetischen Signalen erzeugt. Auf diese Weise ist eine hohe Übertragungssicherheit gewährleistet.

Vorteilhafte Ausbildungen der Erfindung entnimmt man den abhängigen Ansprüchen.

Im Folgenden wird als High-Bit ein Bit bezeichnet, dessen Pegel hoch ist gegenüber dem Pegel eines davon zu unterscheidenden Low-Bits. Beispielsweise kann das High-Bit einen normierten Pegel von 100 % bzw. 1 aufweisen, während das Low-Bit einen Pegel von 0 % oder 0 hat. Alternativ dazu kann aber das Low-Bit auch einen normierten Pegel aufweisen, der einen Zwischenwert zwischen 100% und 0% darstellt, und jedenfalls kleiner ist als der Pegel des High-Bits.

Die High-Bits werden durch die einhüllende Kurve mehrerer mit einer Trägerfrequenz wiederkehrenden elektromagnetischen Signale erzeugt. Als einhüllende Kurve ist diejenige Kurve zu verstehen, durch welche benachbarte Maxima der elektromagnetischen Signale auf kürzestem Wege verbunden werden. Die gleiche Betrachtung kann prinzipiell auch für die Low-Bits angestellt werden. Wenn die Low-Bits einen Pegel von 0 haben, so ist die einhüllende Kurve eine Line auf dem Null-Pegel. Sofern die Low-Bits einen Pegel aufweisen, der einen Zwischenwert zwischen 100% und 0% darstellt, werden auch diese Low-Bits durch die einhüllende Kurve mehrerer mit einer Trägerfrequenz wiederkehrenden elektromagnetischen Signale erzeugt.

Weitere Einzelheiten und Vorteile der erfindungsgemäßen Schaltungsanordnung, sowie damit ausgestatteten Winkel- bzw. Längenmessgeräten ergeben sich aus der nachfolgenden Beschreibung von Ausführungsbeispielen anhand der beiliegenden Figuren.

Es zeigen die
- Figur 1: eine schematische Darstellung eines Tastsystems,
- Figur 2: schematisch ein elektrisches Blockschaltbild des Messtasters,
- Figur 3a: einen Verlauf von Steuerbefehlen zum Aktivieren des Messtasters,
- Figur 3b: einen Verlauf von Steuerbefehlen zum Deaktivieren des Messtasters,
- Figur 4: ein Fließbild zur Methode der Mittelwertbildung.

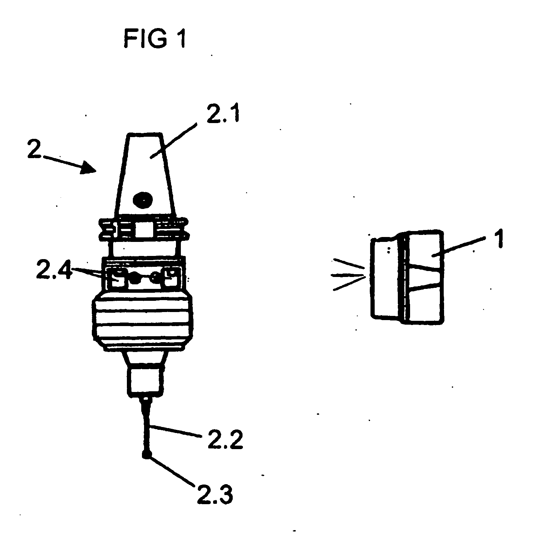

In der Figur 1 ist ein Tastsystem dargestellt, das zur Bestimmung der Position und Kontur eines in einer Werkzeugmaschine, beispielsweise einer Fräsmaschine, eingespannten Werkstückes dient. Das Tastsystem besteht aus einem Sendeelement 1 und einem Messtaster 2. Der Messtaster 2 ist durch einen Konus 2.1 in eine Spindel der entsprechenden Werkzeugmaschine einsetzbar, während das Sendeelement 1 stationär bzw. ortsfest an der Werkzeugmaschine montiert ist. Das Sendeelement 1 weist in der Figur 1 nicht dargestellte Leuchtdioden zum Aussenden vom Infrarotlicht auf.

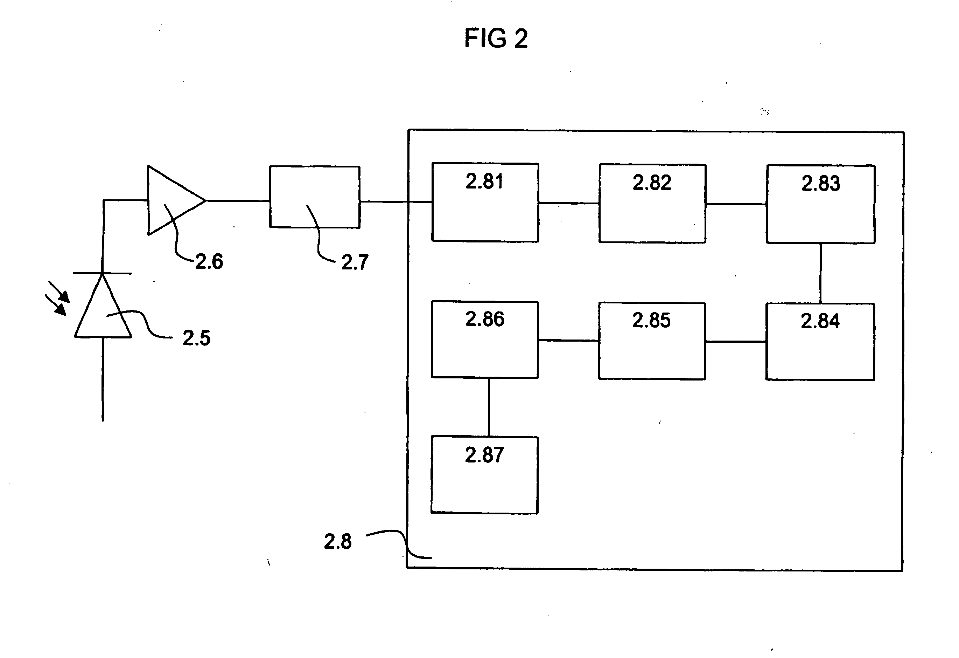

An seinem dem Konus 2.1 gegenüber liegenden Ende weist der Messtaster 2 ein Tastelement in Form eines Taststiftes 2.2 mit einer Antastkugel 2.3 auf, der in alle Richtungen beweglich im Gehäuse des Messtasters 2 gelagert ist. Die Ruheposition des Taststiftes 2.2 liegt in der Regel auf der Symmetrieachse des Messtasters 2, wie in Figur 1 gezeigt. Hinter für Infrarotlicht durchlässigen und über den Umfang des Messtasters 2 verteilten Fenstern 2.4 liegt jeweils eine Fotodiode 2.5 (Figur 2).

In der Figur 2 ist ein elektrisches Blockschaltbild des Messtasters 2 dargestellt. Durch die Fotodioden 2.5 kann einfallendes Infrarotlicht in Fotoströme bzw. -spannungen selektiv umgewandelt werden, während beispielsweise Tageslicht ausgefiltert wird. Auf diese Weise können elektromagnetische Signale, im Ausführungsbeispiel in Form von Infrarotlichtimpulsen S, in elektrische Impulse bzw. elektrische Ströme umgewandelt werden. Diese elektrischen Ströme werden dann in einem Verstärker 2.6 verstärkt, in elektrische Spannungssignale umgewandelt und die Spannungssignale danach einem Bandpassfilter 2.7 zugeführt. Danach gelangen die gefilterten Spannungssignale zu deren Weiterverarbeitung in eine CPU 2.8 (Central Processing Unit).

Der Messtaster 2 wird von einer Batterie, die im Messtaster 2 eingelegt ist, mit der erforderlichen Spannung versorgt. Um eine lange Lebensdauer der Batterie des Messtasters 2 zu gewährleisten, wird der Messtaster 2 außerhalb der eigentlichen Messvorgänge in einem stromsparenden Stand-By-Zustand gehalten.

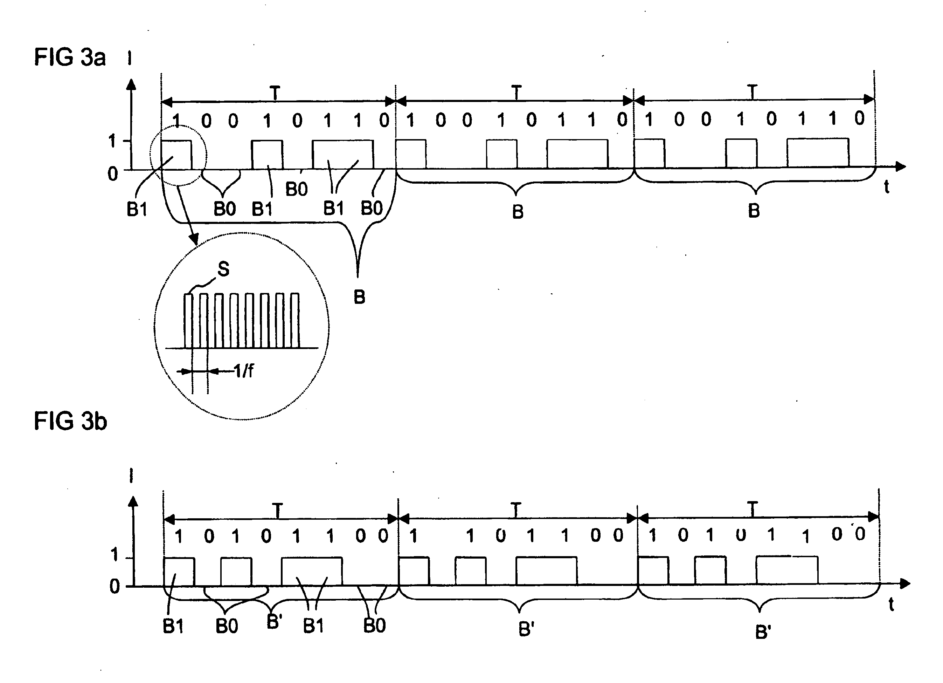

Vor Beginn einer Messung muss also der Messtaster 2 aktiviert werden. Dies wird durch eine drahtlose Verbindung zwischen dem Sendeelement 1 und dem Messtaster 2 vorgenommen. Durch das wiederholte Absetzen, im vorgestellten Ausführungsbeispiel bei optimaler Übertragungsqualität, durch dreimaliges Absetzen, einer Bitfolge B (im gezeigten Beispiel 10010110) wird ein Steuerbefehl erzeugt, welcher nach korrektem Empfang vom Messtaster 2 das Aktivieren des Messtasters 2 auslöst. Zu diesem Zweck werden gemäß der Figur 3a von einer Leuchtdiode des Sendeelementes 1 elektromagnetische Signale, hier also in Form von Infrarotlichtimpulsen S, abgesetzt. In den Figuren 3a und 3b ist jeweils auf der Ordinate die Intensität I der Infrarotlichtimpulse S aufgetragen, während auf der Abszisse die Zeit t gezeigt ist. Die Infrarotlichtimpulse S werden zur Datenübertragung mit einer Trägerfrequenz f moduliert, welche hier 1024 Hz beträgt, so dass die Infrarotlichtimpulse S eine Periode von 1/f, also 0,9766 ms haben. Der Pegel der modulierten Infrarotlichtimpulse S soll definitionsgemäß 100 % bzw. eins betragen. Im gezeigten Beispiel wird ein High-Bit B1 durch die einhüllende Kurve von acht Infrarotlichtimpulsen S gebildet. Die zeitliche Länge eines High-Bits B1 beträgt demnach 8·1/f, also 7,8125 ms.

Sobald der Messtaster 2 aktiviert ist, sendet dieser eine entsprechende Rückmeldung an die Sendeelement 1 zurück. Diese Rückmeldung hat zur Folge, dass das Absetzten der Bitfolge B beendet wird. Sofern jedoch keine Rückmeldung vom Sendeelement 1 empfangen wird, wird bis zu einer vorgegebenen Grenzzeit die Bitfolge B wiederholt gesendet. Für die Auswertung der durch die Fotodioden 2.5 erzeugten elektrischen Ströme ist es vorteilhaft, wenn, wie im Ausführungsbeispiel gezeigt, keine Pausen zwischen zwei gesendeten Bitfolgen B liegen. Alternativ dazu können aber auch Pausen mit definierter Länge zwischen den Bitfolgen B liegen, so das die Pausenlänge für die Auswertung im Messtaster 2 berücksichtigt werden kann.

Die mit 1024 Hz vergleichsweise niedrige Trägerfrequenz f hat den Vorteil, dass im batteriebetriebenen Messtaster 2 ein Verstärker 2.6 und vor allem eine CPU 2.8 eingesetzt werden kann, die relativ wenig Strom benötigen. Bei der Verwendung einer hohen Trägerfrequenz f müssten Verstärker 2.6 im Messtaster 2 gewählt werden, welche höhere Ströme benötigen und somit die Lebensdauer der Batterie verkürzen würden.

Zur Bildung eines störungsunanfälligen Steuerbefehls wird zumindest einmal innerhalb der Bitfolge B zwischen zwei High-Bits B1 mindestens ein Low-Bit B0 abgesetzt. Das Absetzten eines Low-Bits B0 wird hier einfach durch kurzzeitiges Ausschalten der Leuchtdioden des Sendeelementes 1 erreicht, so dass kein Infrarotlichtimpuls S, oder anders ausgedrückt ein Infrarotlichtimpuls S mit dem Pegel Null empfangen wird. Alternativ dazu kann aber zur Bildung eines Low-Bits B0 auch der Pegel der Infrarotlichtimpulse S lediglich reduziert werden, beispielsweise auf 50 %. In diesem Fall werden dann die Low-Bits B0 aus der einhüllenden Kurve der Infrarotlichtimpulse S mit reduziertem Pegel erzeugt. Wie die High-Bits B1 haben auch die Low-Bits B0 eine zeitliche Länge von jeweils 7,8125 ms.

Bei der Festlegung der Bitfolgen B, B' ist es vorteilhaft, wenn die gewählte Bitfolge B, B' Blöcke aus High-Bits B1 mit unterschiedlicher zeitliche Länge aufweist. Zum Beispiel hat die Bitfolge B (10010110) gemäß der Figur 3a drei Blöcke aus High-Bits B1, wobei der erste und der zweite Block eine Bit-Länge, also 7,8125 ms haben. Dagegen weist der dritte Block eine zeitliche Länge von 2.7,8125 ms = 15,625 ms auf. Unter der zeitlichen Länge eines Blocks aus High-Bits B1 ist also diejenige Zeit zu verstehen, innerhalb welcher der Pegel von High-Bits B1 ohne Unterbrechung durch ein Low-Bit B0 vorliegt. Benachbarte High-Bits B1 bilden demnach einen Block, wobei auch ein einzelnes High-Bit B1 als Block (mit minimaler zeitlicher Länge) verstanden wird. Die Festlegung der Bitfolgen B, B' mit Blöcken aus High-Bits B1 mit unterschiedlicher zeitliche Länge trägt zur Erhöhung der Übertragungssicherheit bei, weil insbesondere Störungen aus Interferenzen zweier Lichtquellen auf diese Weise wirksam reduziert werden können. Derartige Interferenzen treten beispielsweise bei Beleuchtungen auf, die aus mehreren Neon-Röhren bestehen. Die Lichtemissionen mehrerer Neonröhren können eine Überlagerung verursachen, welche, ähnlich einer Schwebung, schwankende Amplituden aufweist. Dieser Amplitudenverlauf ist aber in der Regel symmetrisch und ist deshalb leicht von einer Bitfolge B, B' mit Blöcken aus High-Bits B1 mit unterschiedlicher zeitliche Länge unterscheidbar.

Auf diese Weise wird gemäß der Figur 3a eine entsprechende Bitfolge B aus vier High-Bits B1 und vier Low-Bits B0 erzeugt. Die Bitfolge B hat demnach ein zeitliche Länge T von 62,5 ms.

Die Infrarotlichtimpulse S werden, wie bereits erwähnt, mit Hilfe der Fotodiode 2.5 in gepulste elektrische Ströme umgewandelt. Nach deren Verstärkung im Verstärker 2.6, wird zum Zwecke der Ausblendung von Störungen eine Filterung der entsprechenden Spannungssignale im Bandpassfilter 2.7 vorgenommen. Auf diese Weise können Störsignale, welche nicht im Bereich der Trägerfrequenz f liegen weitgehend eliminiert werden. Die gefilterten Spannungssignale werden sodann der CPU 2.8 zugeführt, wo sie zunächst in einem Analog-Digital-Wandler 2.81 digitalisier werden. Die Digitalisierung wird dabei, bezogen auf die Trägerfrequenz f, mit einer vierfache Oversamplingrate vorgenommen, also im gezeigten Beispiel mit 4096 Hz. Auf diese Weise werden also aus den analogen Spannungssignalen digitale Daten erzeugt, welche im Folgenden durch Softwareoperationen weiterverarbeitet werden.

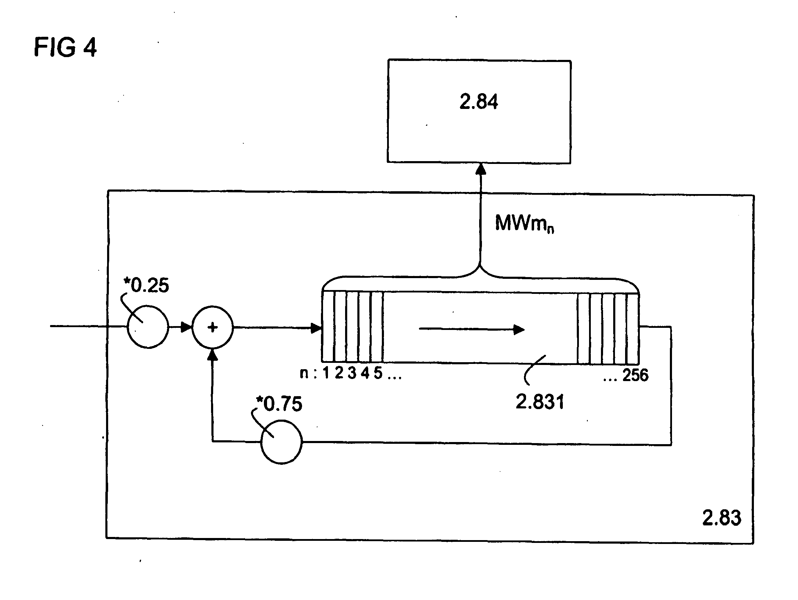

Im nächsten Schritt wird ein digitaler Filter 2.82 angewendet, so dass weitere noch vorliegende Störinformationen signifikant reduziert werden. Die derartig gefilterten Daten werden dann gemittelt. Im gezeigten Beispiel wird zur Bildung von Mittelwerten MWmₙ keine arithmetische Mittelung vorgenommen, sondern ein spezielles Mittelungsverfahren, welches anhand der Figur 4 erläutert wird: In dem Mittelungsverfahren werden durch das auf die Trägerfrequenz f bezogene vierfache Oversampling, pro Bitfolge B, B' (welche aus acht Bits mit je acht Signalen aus den Infrarotlichtimpulsen S bestehen) 4·8·8, also 256 Werte in ein Schieberegister 2.831 eingelesen. Bevor jedoch diese Werte vom Schieberegister 2.831 aufgenommen werden, werden sie mit der Zahl 0,25 multipliziert. Danach werden die mit 0,25 multiplizierten Werte mit einem aus dem Schieberegister herrührenden Wert (zurückgeführt durch eine Schleife) zu einem Summenwert addiert. Dieser Summenwert wird dann mit einem Takt von 4096 Hz durch das Schieberegister 2.831 geschoben, wobei mit dem gleichen Takt immer wieder neue Summenwerte in das Schieberegister aufgenommen werden. Nach einer Zeit von 256/(4096 Hz), also 62,5 ms verlässt der Summenwert wieder das Schieberegister 2.831 und wird dann mit der Zahl 0,75 multipliziert, um nun zur Addition mit neuen Werten zu Verfügung zu stehen. Gleichzeitig werden die 256 Summenwerte MWmₙ des Schieberegisters 2.831 an den Demodulator 2.84 weitergegeben. Die Summenwerte MWmₙ beziehen sich also auf die Werte in n Zellen des Schieberegisters 2.831 nach dem m-ten Durchlauf durch die Schleife.

Üblicherweise bedarf es nach dem Absetzten der ersten Bitfolge B, B' ein vielfaches Durchlaufen der Schleife bis die jeweiligen Mittelwerte MWmₙ für die folgende Weiterverarbeitung eine Ausprägung erreichen, welche letztlich eine Reaktion, z. B. das Aktivieren des Messtasters 2 hervorruft.

Durch diese Mittelwertbildung wird die Übertragungssicherheit weiter erhöht. Danach wird in einem Demodulator 2.84 die Trägerfrequenz f aus den erzeugten Daten herausgerechnet, so dass nach diesem Schritt für die High-Bits B1 und die Low-Bits B0 nur noch eine Zahl verbleibt, welche dem jeweiligen Pegel der High-Bits B1 und der Low-Bits B0 entspricht.

Im Normierer 2.85 werden dann die tatsächlichen Pegel der High-Bits B1 und Low-Bits B0 an die Pegel eines vorgegebenen Sollwerts angepasst. Die Daten der normierten High-Bits B1 und Low-Bits B0 werden dann im Korrelator 2.86 dahingehend überprüft, dass die Differenz zwischen dem Ist-Pegel und dem Soll-Pegel für jedes High-Bit B1 und Low-Bit B0 gebildet wird. Dabei werden alle derartig gebildeten Differenzen aufsummiert. Sofern diese Summe einen vorgegebenen Wert unterschreitet werden die Daten für gültig befunden und schließlich einer Drei-aus-vier-Logik 2.87 zugeführt. Dort wird überprüft, ob drei von vier aufeinanderfolgenden Bitfolgen B, B' korrekt waren. Wenn diese Überprüfung erfolgreich durchgeführt wurde, wird der Messtaster 2 aktiviert.

Nun ist der Messtaster 2 für den Messbetrieb bereit. Bei einem Kontakt der Antastkugel 2.3 des Taststiftes 2.2 mit einem in der entsprechenden Werkzeugmaschine eingespannten Werkstück wird der Taststift 2.2 aus seiner Ruheposition heraus ausgelenkt. Diese Auslenkung wird durch eine Detektoranordnung des Messtasters 2 erfasst und auch ein entsprechendes Infrarot-Signal an das stationär an der Werkzeugmaschine montierte Sendeelement 1, welches auch zum Empfang von Infrarotlicht geeignet ist, zurückgesendet.

Nach dem Messvorgang wird durch Senden eines weiteren Steuerbefehls gemäß der Figur 3b der Messtaster 2 wieder deaktiviert und in den Stand-By-Zustand zurückversetzt. Der Steuerbefehl besteht aus hintereinander abgesetzten Bitfolgen B' (10101100), wobei die High-Bits B1 wiederum aus mit der Trägerfrequenz f modulierten Infrarotlichtimpulsen S erzeugt werden, während die Low-Bits B0 durch temporäres Ausschalten der Leuchtdiode des Sendeelementes 1 entstehen.

Die Bitfolgen B, B' zum Aktivieren bzw. zum Deaktivieren des Messtasters 2 wurde so gewählt, dass eine Verwechslung bei der Auswertung im Messtaster 2 durch eine gestörte Datenübertragung extrem unwahrscheinlich ist. Eine bevorzugte Kombination besteht aus diesem Grund aus den Bitfolgen B, B' 10010110 und 10101100. Im Allgemeinen können geeignete, also schwer verwechselbare Bitfolgen B, B' unter Durchführung einer computergestützten Kreuzkorrelation ermittelt werden.

## Patentansprüche

1. Verfahren zum drahtlosen Übertragen eines Steuerbefehls von einem Sendeelement (1) zu einem Messtaster (2) mittels elektromagnetischer Signale in Form von Infrarotlichtimpulsen (S), **dadurch gekennzeichnet dass**
der Steuerbefehl mindestens eine Bitfolge (B, B') umfasst, welche aus High-Bits (B1) und mindestens einem Low-Bit (B0) besteht, wobei die High-Bits (B1) durch die einfüllende Kurve mehrerer mit einer Trägerfrequenz (f) wiederkehrenden elektromagnetischen Signale (S) erzeugt werden und innerhalb einer Bitfolge (B, B') mindestens einmal mindestens ein Low-Bit (B0) zwischen zwei High-Bits (B1) gesendet wird, wobei im Messtaster (2) die Infrarotlichtimpulse (S) mit Hilfe einer Fotodiode (2.5) in gepulste elektrische Ströme umgewandelt werden, danach in einem Verstärker (2.6) verstärkt und in elektrische Spannungssignale umgewandelt werden und die Spannungssignale einer CPU (2.8) zugeführt werden, wo sie in einem Analog-Digital-Wandler (2.81) zur weiteren Verarbeitung digitalisiert werden.

2. Verfahren gemäß dem Anspruch 1, **dadurch gekennzeichnet dass** die Trägerfrequenz (f) kleiner als 50 kHz, insbesondere kleiner als 10 kHz oder kleiner als 5 kHz ist.

3. Verfahren gemäß einem der vorhergehenden Ansprüche, **dadurch gekennzeichnet dass** die einhüllende Kurve von mindestens acht mit der Trägerfrequenz (f) wiederkehrenden elektromagnetischen Signale (S) erzeugt wird.

4. Verfahren gemäß einem der vorhergehenden Ansprüche, **dadurch gekennzeichnet dass** der Steuerbefehl aus mehreren hintereinander gesendeten Bitfolgen (B, B') besteht.

5. Verfahren gemäß einem der vorhergehenden Ansprüche, **dadurch gekennzeichnet dass** in einem Empfängerelement des Tastsystems, insbesondere im Messtaster (2), die elektromagnetischen Signale (S) in gepulste elektrische Ströme beziehungsweise Spannungen umgewandelt werden, welche digitalisiert werden.

6. Verfahren gemäß einem der vorhergehenden Ansprüche, **dadurch gekennzeichnet dass** der Steuerbefehl eine Aktivierung des Messtasters (2) aus einem Stand-By-Zustand oder eine Deaktivierung des Messtasters (2) in einen Stand-By-Zustand auslöst.

7. Verfahren gemäß Anspruch 6, **dadurch gekennzeichnet dass** für die Aktivierung des Messtasters (2) und für die Deaktivierung des Messtasters (2) unterschiedliche Steuerbefehle verwendet werden.

8. Verfahren gemäß einem der vorhergehenden Ansprüche, **dadurch gekennzeichnet dass** die Bitfolge (B, B') Blöcke aus High-Bits (B1) mit unterschiedlicher zeitlicher Länge aufweisen.

## Claims

1. A method for the wireless transmission of a control command from a transmission element (1) to a measuring probe (2) by means of electromagnetic signals in the form of infrared light pulses (S), **characterized in that** the control command comprises at least one bit string (B, B'), which consists of high bits (B1) and at least one low bit (B0), wherein the high bits (B1) are generated by means of the enveloping curve of several electromagnetic signals (S), which return with a carrier frequency (f), and within a bit string (B, B') at least one low bit (B0) is transmitted at least once between two high bits (B1), wherein the infrared light pulses (S) are converted in the measuring probe (2) into pulsed electric currents by means of a photodiode (2.5), are amplified thereafter in an amplifier (2.6) and are converted into electric voltage signals and the voltage signals are fed to a CPU (2.8), where they are digitized in an analog digital converter (2.81) for further processing.

2. The method according to claim 1, **characterized in that** the carrier frequency (f) is less than 50 kHz, in particular less than 10 kHz or less than 5 kHz.

3. The method according to one of the preceding claims, **characterized in that** the enveloping curve is generated by at least eight electromagnetic signals (S), which return with the carrier frequency (f).

4. The method according to one of the preceding claims, **characterized in that** the control command consist of several bit strings (B, B'), which are transmitted consecutively.

5. The method according to one of the preceding claims, **characterized in that** the electromagnetic signals (S) are converted in a receiving element of the scanning system, in particular in the measuring probe (2), into pulsed electric currents or voltages, respectively, which are digitized.

6. The method according to one of the preceding claims, **characterized in that** the control command triggers an activation of the measuring probe (2) from a stand-by state or a deactivation of the measuring probe (2) into a stand-by state.

7. The method according to claim 6, **characterized in that** different control commands are used for the activation of the measuring probe (2) and for the deactivation of the measuring probe (2).

8. The method according to one of the preceding claims, **characterized in that** the bit string (B, B') encompass blocks of high bits (B1) comprising different chronological length.

## Revendications

1. Procédé pour la transmission sans fil d'un ordre de commande d'un élément émetteur (1) vers une sonde de mesure (2), au moyen de signaux électromagnétiques sous la forme d'impulsions de lumière infrarouges (S), **caractérisé en ce que**
l'ordre de commande comprend au moins une séquence binaire (B, B') constitué de bits poids fort (B1) et d'au moins un bit poids faible (B0), dans lequel les bits poids fort (B1) sont produits par la courbe enveloppante de plusieurs signaux électromagnétiques (S) périodiques avec une fréquence porteuse (f) et au moins un bit poids faible (B0) est envoyé au moins une fois entre deux bits poids fort (B1) dans une séquence binaire (B, B'), dans lequel les impulsions de lumière infrarouge (S) sont converties en courants électriques pulsés, dans la sonde de mesure (2), à l'aide d'une photodiode (2.5), puis amplifiées dans un amplificateur (2.6) et converties en signaux de tension électriques, les signaux de tension étant conduits vers une unité centrale de traitement (2.8), où ils sont numérisés dans un transducteur analogique-numérique (2.81) pour la suite du traitement.

2. Procédé selon la revendication 1, **caractérisé en ce que** la fréquence porteuse (f) est inférieure à 50 kHz, en particulier inférieure à 10 kHz ou inférieure à 5 kHz.

3. Procédé selon l'une des revendications précédentes, **caractérisé en ce que** la courbe enveloppante est produite par au moins huit signaux électromagnétiques (S) périodiques avec la fréquence porteuse (f).

4. Procédé selon l'une des revendications précédentes, **caractérisé en ce que** l'ordre de commande est constitué de plusieurs séquences binaires (B, B') émises les unes à la suite des autres.

5. Procédé selon l'une des revendications précédentes, **caractérisé en ce que**, dans un élément récepteur du système de sonde, en particulier dans la sonde de mesure (2), les signaux électromagnétiques (S) sont convertis en courants ou tensions électriques pulsé(e)s, qui sont numérisé(e)s.

6. Procédé selon l'une des revendications précédentes, **caractérisé en ce que** l'ordre de commande déclenche une activation de la sonde de mesure (2), à partir d'un état d'attente, ou bien une désactivation de la sonde de mesure (2), vers un état d'attente.

7. Procédé selon la revendication 6, **caractérisé en ce que** des ordres de commande différents sont utilisés pour l'activation de la sonde de mesure (2) et pour la désactivation de la sonde de mesure (2).

8. Procédé selon l'une des revendications précédentes, **caractérisé en ce que** la séquence binaire (B, B') comporte des blocs constitués de bits poids fort (B1) avec des longueurs temporelles différentes.
